# EUROPEAN PATENT APPLICATION

(11) **EP 0 753 274 A1**
(43) Date of publication of application: **15.01.1997**
(21) Application number: 96830315.6
(22) Date of filing: 04.06.1996
(51) Int. Cl.: A46B 13/00, B60S 3/06

(54) **Brush for motor vehicle automatic washing system**

(30) Priority: 13.07.1995 IT MI951503
(71) Applicant: FAVAGROSSA EDOARDO S.r.l., I-26040 Roncadello (Cremona) (IT)
(72) Inventor: Favagrossa, Francesco, c/o Favagrossa Edoardo Srl., 26040 - Roncadello (IT)
(74) Representative: Cicogna, Franco

(57) **Abstract**

The present invention relates to a brush for motor vehicle automatic washing systems, characterized in that the brush comprises a cylindric body having on the surface thereof a plurality of hollows, in which can be removably engaged flexible plastic material fins, having a slit for holding with felt pieces and the like. The fins are specifically designed for enhancing the useful diameter of the cylindric body and practically stiffen the felt.

## Description

### BACKGROUND OF THE INVENTION

The represent invention relates to a brush for motor vehicle automatic washing systems.

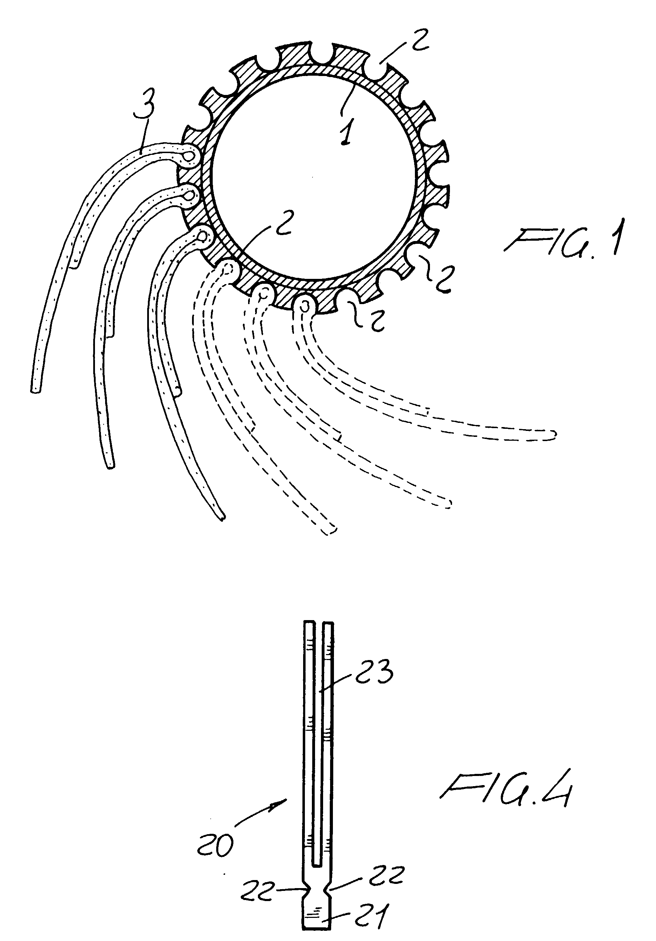

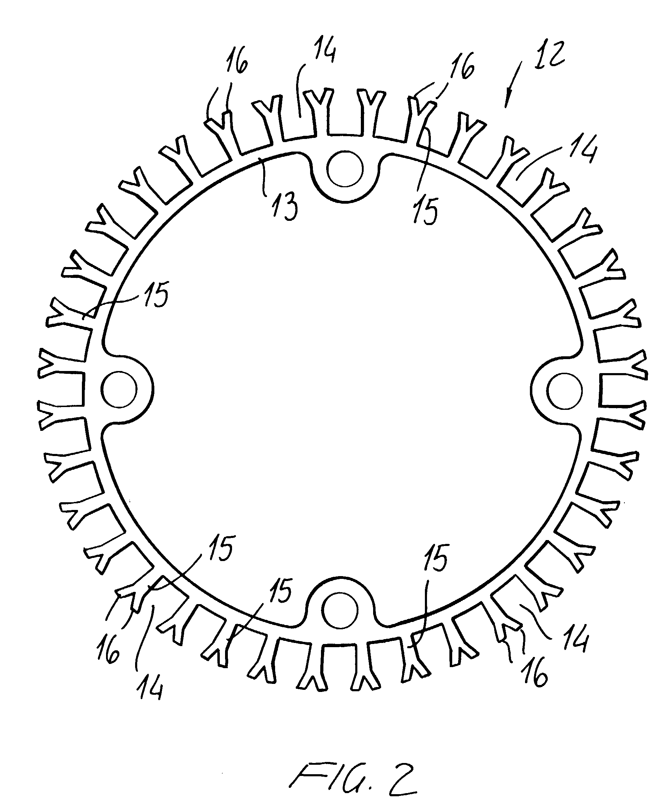

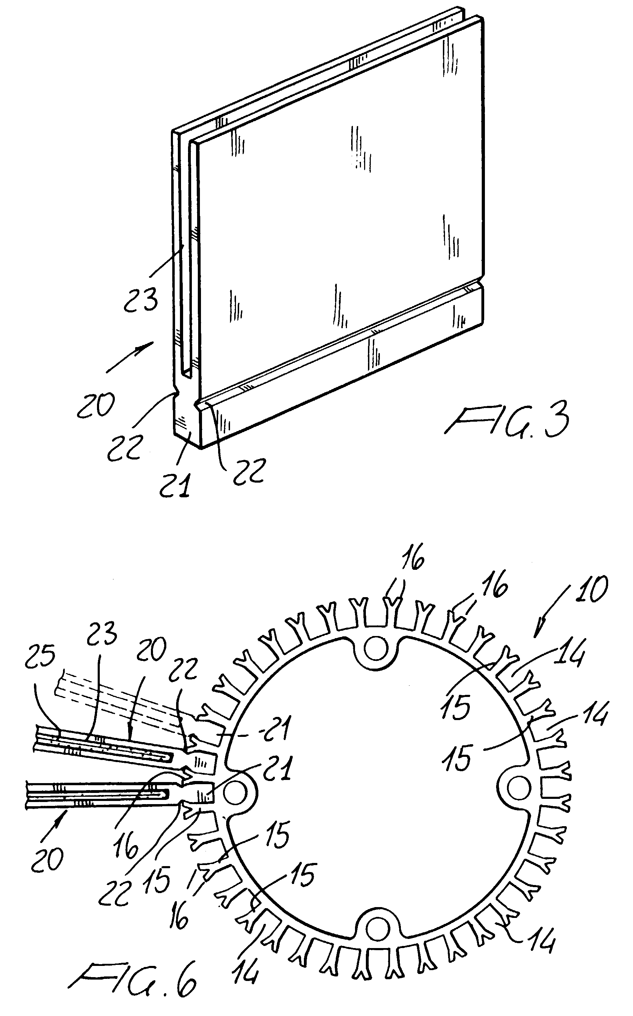

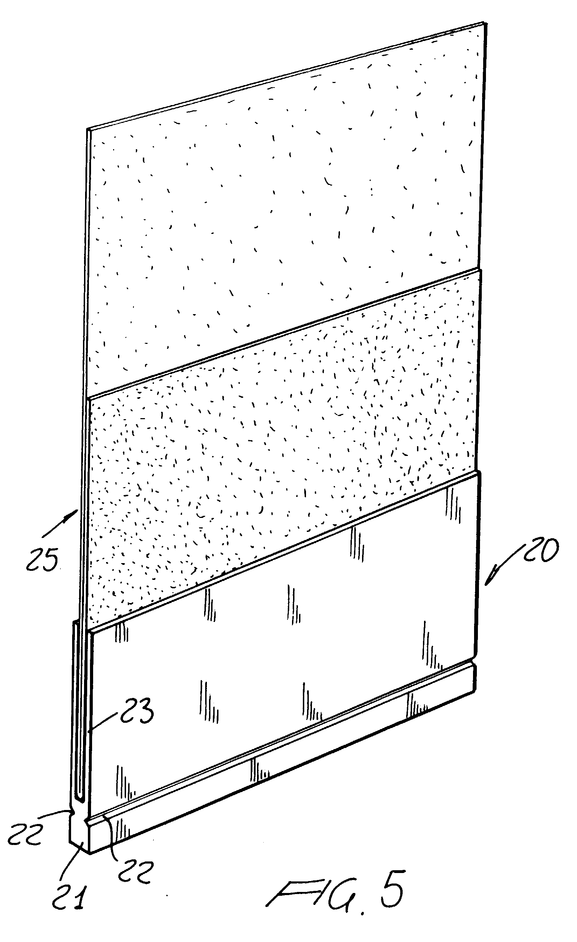

As known, several different brushes for automatic systems for washing motor vehicles and the like are already known, comprising, as shown in figure 1, a cylindric body 1 provided, on the surface thereof, with a plurality of hollows or cavities 2, in which are engaged felt pieces 3.

With this arrangement, since any supporting elements is actually lacking, the felt will tend to fall, since it is not suitable to assume any self-supporting positions causing the felt to project outwardly in a substantially radial direction.

Vive versa, for use on automatic washing machines, for washing or polishing motor vehicle, the felt must have a given strength allowing the automatic washing machine to adjust the spacing of the brush from the motor vehicle.

Thus, with the above disclosed arrangement, since the side surface of the brush supporting tube has a comparatively small size, it is not possible to assemble thereon a lot of felt pieces and, accordingly, because of their nature and their reduced number, these felt pieces can not properly resist against or hold the pressure.

Moreover, the length, or projection extension of the pieces from the surface of the supporting tube must be so selected as to provide, in most cases, a brush having, during its rotary movement, a total diameter of about 1 metre.

In order to achieve such a size, because of the above mentioned reasons, some brush makers have greatly increased the diameter of the supporting tube, the diameter of which is frequently greater than 30 cm, by using complex arrangements for a proper operation of the brushes, but these prior approaches have not been found as satisfactory.

### SUMMARY OF THE INVENTION

Accordingly, the aim of the present invention is to overcome the above disclosed drawbacks, by providing a brush for motor vehicle automatic washing systems which provides the possibility, starting from a small diameter supporting cylindric body, of achieving an optimum operating width, thereby providing an outer diameter of the brush allowing the washing machine to optimally operate.

Within the scope of the above mentioned aim, a main object of the present invention is to provide such a washing brush in which the felt pieces length can be greatly shortened thereby allowing a great material saving as well as increasing the felt mechanical strength.

A further object of the present invention is to provide such a washing brush which, while using a comparatively small number of felt pieces, is effective to prevent the felt pieces from excessively bending and which, moreover, is very reliable and safe in operation as well as very competitive from a mere economic standpoint.

According to one aspect of the present invention, the above mentioned aim and objects, as well as yet other objects, which will become more apparent hereinafter, are achieved by a brush for motor vehicle automatic washing systems, characterized in that said brush comprises a cylindric body provided, on the surface thereof, with a plurality of hollows in which are removably engaged a plurality of flexible plastic material fins, said strips having a slit for engaging and holding therein felt pieces and the like, said fins being suitable to increase the useful diameter of said cylindric body.

### BRIEF DESCRIPTION OF THE DRAWINGS

Further characteristics and advantages of the present invention will become more apparent hereinafter from the following detailed disclosure of a preferred, though not exclusive, embodiment of a washing brush for motor vehicle automatic washing systems and the like, which is illustrated, by way of an indicative, but not limitative, example, in the figures of the accompanying drawings, where:
Figure 1 is a cross sectional view of a washing brush according to the prior art;
Figure 2 is a further cross sectional view illustrating the cylindric body of the washing brush according to the present invention;
Figure 3 is a perspective view illustrating one of the flexible fins of the subject brush;
Figure 4 is a further view of the flexible fin as seen from one end thereof;
Figure 5 is a perspective view illustrating a flexible fin with engaged therein a felt piece; and
Figure 6 illustrates the washing brush according to the present invention with the fins engaged on the cylindric body thereof.

### DESCRIPTION OF THE PREFERRED EMBODIMENT

With reference to the number references of the above mentioned figures, the washing brush for motor vehicle automatic washing systems and the like, according to the present invention, which has been generally indicated by the reference number 10, comprises a brush cylindric body 12, advantageously made of an extruded tubular element 13, provided on the peripheral surface thereof with a plurality of evenly distributed hollows or cavities 14.

The hollows 14 are defined by radially extending elements 15 which end with slanted bifurcated lug portions 16 which practically define the outlet mouth of the hollows 14.

With the disclosed arrangement of the hollows, it is possible to use flexible felt bearing fins 20, constituted of flexible plastic material small blocks, having a flat configuration and provided each with an attachment foot 21, defined by grooves 22, and which can be engaged in the hollows 14 by an axial introductory movement.

The fins are provided, at the flat portion thereof, with a slit 23 in which a felt piece can be engaged, said felt piece being indicated by 25 and being provided to be firmly held, for example by stitching or the like, so that, owing to the engagement with the respective fin, the felt piece will be properly supported.

Thus, the useful diameter of the brush cylindric body can be practically increased, so as to provide the washing brush with an optimum diameter for a proper operation of the washing machine, while starting from a cylindric body having a comparatively small diameter.

In this connection it should be pointed out that the felt piece bearing fins 20, being of a plastic material, will preserve the desired flexibility while allowing the machine to move the washing brush toward the motor vehicle in a safe manner, both due to the softness of the flexible material, and due to the nature of this material which will not scratch in any manner the body of the motor vehicle.

Moreover, the fins 20 can also be engaged in the hollows or grooves in a felt free condition, in order to provide washing brushes having distributed or "rarefied" bristles while preventing the felt pieces engaged in the next hollow to excessively bend.

From the above disclosure it should be apparent that the invention fully achieves the intended aim and objects.

In particular, the fact is to be pointed out that the provision of the felt piece bearing fins, which can be arranged between the felt pieces and the cylindric body, provides the possibility, at first, of increasing the useful diameter of the washing brush and, moreover, of stiffening the felt pieces, thereby preventing the latter from falling away as it occurs in prior art washing brushes.

The invention, as disclosed, is susceptible to several variations and modifications, all of which will come within the inventive scope.

Moreover, all of the details can be replaced by other technically equivalent elements.

In practicing the invention, the used materials, as well as the contingent size and shapes can be any, depending on requirements.

## Claims

1. A brush for motor vehicle automatic washing systems, characterized in that said brush comprises a cylindric body provided, on the surface thereof, with a plurality of hollows in which are removably engaged a plurality of flexible plastic material fins, said strips having a slit for engaging and holding therein felt pieces and the like, said fins being suitable to increase the useful diameter of said cylindric body.

2. A brush according to Claim 1, characterized in that said hollows are defined by forming elements extending from a tubular element comprising said cylindric body and ending with slanted lug portions.

3. A brush according to Claims 1 and 2, characterized in that said flexible fins are provided with a flat fin body having an attachment foot which can be engaged in a respective said hollow as delimited by a pair of grooves.

4. A brush according to one or more of the preceding claims, characterized in that the felt piece is engaged in the slit provided on the flat portion of said fins and being herein held by stitches.

5. A brush according to one or more of the preceding claims, characterized in that in said hollows are engaged felt piece free fins, in order to provide a rarefied bristle washing brush while properly supporting adjoining bristles of said brush.
